Europäisches Patentamt

European Patent Office

Office européen des brevets

(11) Publication number: **0 453 007 A2**

# EUROPEAN PATENT APPLICATION

(21) Application number: **91200554.3**

(22) Date of filing: **13.03.91**

(51) Int. Cl.⁵: **F17D 1/075, F02G 5/04**

(30) Priority: **23.03.90 NL 9000690**

(43) Date of publication of application:
**23.10.91 Bulletin 91/43**

(84) Designated Contracting States:
**AT BE CH DE DK ES FR GB GR IT LI LU NL SE**

(71) Applicant: **ADVIESBUREAU AMERCONSULT B.V.**
**Pijperhof 4**

**NL-4941 WR Raamsdonksveer(NL)**

(72) Inventor: **Verweij, Klaas Aart**
**Pijperhof 4**
**W-4941 WR Raamsdonksveer(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Gas heating system.

(57) The invention is applicable to heating systems for heating pressurized gas, in particular natural gas, which is expanded in an expansion machine. Such heating system comprises an internal combustion engine (14), in particular a gas engine, and a first cooling circuit (11) for removing heat developed by the engine (14), which first cooling circuit (11) incorporates a first heat exchanger (3) for delivering heat obtained in cooling the engine (14) to the gas. According to the invention, such heating system is characterized by a second cooling circuit (20) for cooling combustion air to be fed to the engine (14), which second cooling circuit (20) incorporates a second heat exchanger (7) for delivering heat obtained in cooling the combustion air to the gas. The first cooling circuit (11) can incorporate a separate heat exchanger (15) for cooling the exhaust gases of the internal combustion engine (14) and heating the gas. If the engine (14) is fed by compressed air cooled by an intercooler (21), this intercooler (21) can be incorporated in the second cooling circuit (20). The first heat exchanger (3) can for instance be situated upstream of the expansion machine (5), while the second heat exchanger (7) be situated downstream of the expansion machine (5) or upstream of the first heat exchanger (3). Both the internal combustion engine (14) and the expansion machine (5) can drive one and the same generator (30).

fig-1

Rank Xerox (UK) Business Services

EP 0 453 007 A2

The invention relates to a heating system for heating pressurised gas, in particular natural gas, which is expanded in an expansion machine, comprising an internal combustion engine, in particular a gas engine, and a first cooling circuit for removing heat developed by the engine, which first cooling circuit incorporates a first heat exchanger for delivering heat obtained in cooling the engine to the gas.

Such a heating system, but in that case heated by water heated in a gas-fired boiler is, for example, used in measuring and regulating stations and gas receiving stations which, inter alia, are incorporated in the Dutch natural gas mains. In said measuring and regulating stations and gas receiving stations, pressure reduction takes place by throttling, as a result of which energy is lost. The natural gas, which is compressed to a pressure of approximately 64 bar for the purpose of transportation, is expanded to 40 bar in the measuring and regulating stations, of which there are about 60 in the Netherlands. At points which are then subsequently situated closer to the end users, the gas pressure is reduced from 40 bar to 8 bar or lower in the receiving stations, of which there are approximately 1000 in the Netherlands. Recently expansion in a turbine has been acquiring more acceptance in countries surrounding the Netherlands so that the energy liberated during the expansion can be used, for example, to generate electrical power. During the expansion the temperature of the natural gas, which is normally at the ground temperature of approximately 10°C, may decrease considerably. Temperature drops of 80 - 100°C are not uncommon under these conditions when the gas expands. An excessively large drop in the temperature of the natural gas below the average ground temperature of approximately 10°C is, however, very undesirable. In order to prevent this, the natural gas is heated. Usually this heating takes place immediately upstream of the expansion, in particular in a manner such that the temperature of the natural gas is approximately 10°C after the expansion. The simplest way of bringing about the heating is with the aid of the combustion of a fuel, the heat of combustion of which is used directly. According to EP-A-0.004.398, it is also possible, but hardly used in the Netherlands, to drive an internal combustion engine with the fuel, the heat developed in the engine in, for example, the outlet gases and the engine cooling being used to heat the natural gas, and the combustion engine drives for instance an electrical generator. This increases the efficiency of the fuel.

Such internal combustion engines are so designed that, for the purpose of particular conditions, they can deliver a higher power for a shorter or longer time. If such an engine is used to generate electrical power, it is possible to absorb the load peaks of the electricity mains in this way. This possibility of being able to deliver a greater power temporarily makes such an internal combustion engine particularly cost-effective from an economic point of view. It has, however, been found that such an internal combustion engine cannot deliver the desired peak power under all weather conditions. The temperature of the inlet air for the internal combustion engine in particular, is the cause of this. This temperature can, after all, vary appreciably depending on the season of the year. Without special and often expensive measures, the additional power the engine can deliver may be found to be too low as a result of this, particularly in the summer. The modern internal combustion engines which operate with pressurised charging in which the combustion air is first compressed, is then cooled and thereafter reaches the internal combustion engine have this drawback.

The present invention contributes to solving the problem outlined above adequately.

For this purpose, the present invention is characterised by a second cooling circuit for cooling combustion air to be fed to the engine, which second cooling circuit incorporates a second heat exchanger for delivering heat obtained in cooling the combustion air to the gas.

As a result of this measure, the inlet gas for the internal combustion engine is cooled with the aid of the natural gas, and this results in a combustion air temperature which is virtually independent of the weather conditions.

Such a heating system can additionally be characterised in that the first cooling circuit incorporates a separate heat exchanger for cooling the exhaust gases of the internal combustion engine and heating the gas.

Such a heating system will be suitable, in particular, when using an internal combustion engine with pressurised charging, in which the heating system is characterised by an intercooler for cooling the compressed air to be fed to the engine, which intercooler is incorporated in the second cooling circuit.

As has already been stated above, it is preferable to heat the gas upstream of the expansion in order to prevent condensation problems. In such a case, the second heat exchanger, which is connected to the second cooling circuit for the purpose of cooling the combustion air for the internal combustion engine, can be placed upstream of the first heat exchanger. The relatively cool gas at approximately ground temperature will consequently first be heated up to a small extent by the inlet air of the engine and then heated to the desired temperature by the heat developed by the engine, after which the expansion takes place.

In such an arrangement in which both cooling circuits deliver their heat to the gas before it expands, it is, of course, possible to make use of one heat exchanger for transmitting the heat to the gas, in which heat exchanger both cooling circuits are integrated.

The heating of the gas may, however, also take place partly upstream of, and partly downstream of, the expansion. Such an embodiment of the heating system may be characterised in that the first heat exchanger is situated upstream of the expansion machine and the second heat exchanger downstream thereof.

In this case the system may, for example, be so adjusted that the temperature of the gas is approximately 0°C after the expansion. The desired gas temperature is then established with the aid of the second cooling circuit. In this process the temperature of the combustion air can be cooled upstream of the internal combustion engine to approximately the gas temperature at the outlet of the expansion machine.

Such a method of embodying the present invention also offers the advantage that the gas temperature at the outlet of such a heating system can be regulated independently of the prevailing circumstances. Specifically, it has been found that, especially as a result of unavoidable pressure changes in the gas mains, simply heating the gas before it expands results in temperature variations at the outlet of the expansion machine. After-heating with the aid of the combustion air solves this problem.

The expansion machine used in the heating system will often take the form of a turbine. Both the internal combustion engine and the turbine can then drive a generator in order, for example, to generate electrical power. In this connection, it is preferable, in imitation of the simultaneously filed Dutch Patent Specification (N.O. 36320), to so design the heating system that the output shaft of the internal combustion engine and the output shaft of the expansion machine are able to drive one and the same generator, in particular an electrical generator.

Such a measure will have a cost-saving effect. In addition, it will be simpler to build the entire heating system into a container as a result. Building such a system into a container is in any case particularly attractive.

The present invention will be explained in more detail below with reference to the accompanying drawings.

In these,

Figure 1 shows a first embodiment of the present invention in a diagrammatic view,

Figure 2 shows a second embodiment of the present invention in a diagrammatic view,

Figure 3 shows the change of state of gas in a heating system in accordance with an entropy/enthalpy diagram.

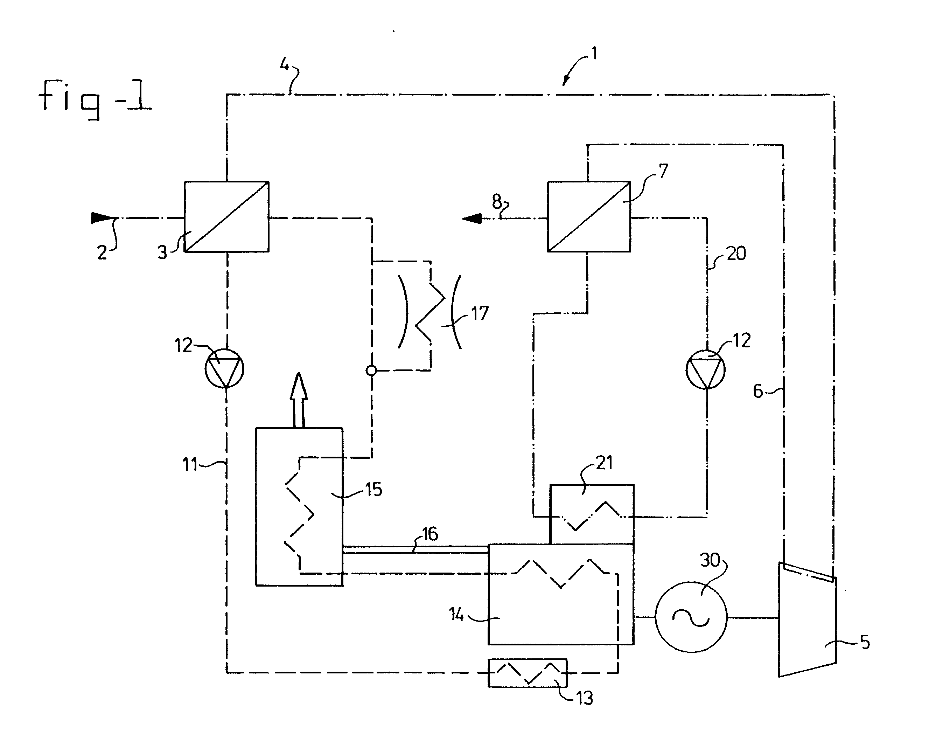

In Figure 1, compressed gas enters the inlet 2 of the diagrammatically depicted heating system 1, passes the first heat exchanger 3, flows through the high-pressure line 4 to the expansion machine 5, where it expands and then leaves the heating system 1 at the outlet 8 via the low-pressure line 6 and the second heat exchanger 7. In the first heat exchanger 3, the gas is heated by the medium flowing through the cooling circuit 11, if desired provided with one or more non-return valves 12 which only permit flow in one direction. The medium of the cooling circuit 11 flows in Figure 1 successively through an oil cooler 13, through the engine 14 and through a heat exchanger 15 for the engine combustion gases 16, after which the heat absorbed is given up into the first heat exchanger 3. Of course, the oil cooler 13, the internal combustion engine 14 and the heat exchanger 15 may also have flowing through them media of separate circuits which all come together in the first heat exchanger 3 or in separate heat exchangers which are placed downstream of one another and which have the same function as the first heat exchanger 3. It could also be possible to transfer the heat of the combustion gases 16 to the gas in the high-pressure line 4 without the intervention of a cooling circuit 11. To obtain the desired temperature of the gas in the high-pressure line 4, use can be made of measuring and regulating means which are not shown here and whose design will be obvious to the specialist in the field. For the sake of clarity it is indicated that the medium in the cooling circuit 11 can be cooled completely or partly to the environment in an additional heat exchanger 17. After the gas has been expanded by means of the expansion machine 5, its temperature will have dropped appreciably. This temperature can be kept virtually constant by a correct regulation of the degree of heat transfer in the first heat exchanger 3. In the second heat exchanger 7, after-heating of the gas takes place to the desired temperature at the outlet 8. For this purpose, the medium in the cooling circuit 20 transfers its heat to the gas in the second heat exchanger 7. For this purpose, the medium in the cooling circuit 20 is heated by the inlet air of the internal combustion engine 14. This can be done, for example, in a heat exchanger 21 which, in the case of an internal combustion engine with pressurised charging is described as an "intercooler". In this way it is possible to cool the inlet air to approximately the temperature of the gas in the low-pressure line 6. As a result of this, an inlet-air temperature is ensured which is virtually independent of the weather factors. Consequently, the internal combustion engine 14 is able to deliver one and the same maximum power under all conditions. In Figure 1, internal combustion engine 14 and expansion machine 5, in this case a turbine, jointly drive an electrical generator 30. In addition, it is possible for the fuel to be drawn from the gas mains to which the heating system is connected, provided said gas is combustible, upstream of the internal combustion engine 14.

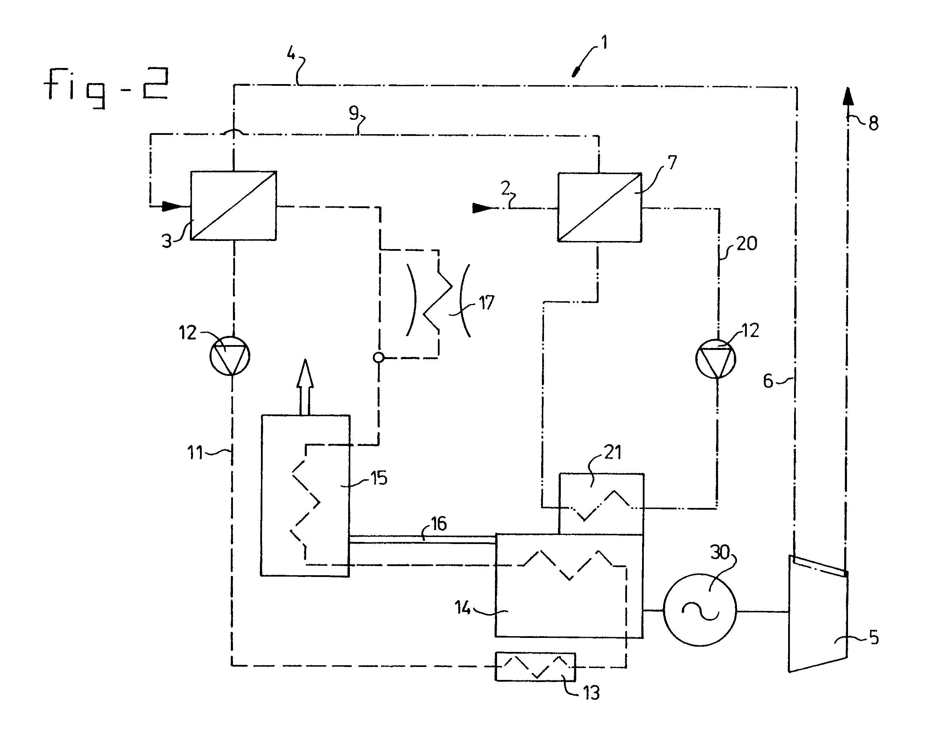

Figure 2 shows an alternative design of the heating system 1 which is shown diagrammatically therein. In this case, the first heat exchanger 3, like the second heat exchanger 7 is situated upstream of the expansion machine 5. The gas enters the heating system via the inlet 2, flows through the second heat exchanger 7, then via the high-pressure line 9 through the first heat exchanger 3 and through the high-pressure line 4 to the expansion machine 5, where the gas expands and then leaves the heating system 1 via the low-pressure line 6 and the outlet 8. In this design, the cooling circuits 11 and 20, respectively, connected to a the first heat exchanger 3 and the second heat exchanger 7, as well as all the other components are the same as in Figure 1. In the design in accordance with Figure 2, the combustion air for the internal combustion engine 14 can be cooled to a temperature which is approximately equal to the temperature of the gas at the inlet 2. In the case of the natural gas mains, in which the gas flows through lines in the ground, this temperature is also virtually independent of the weather factors.

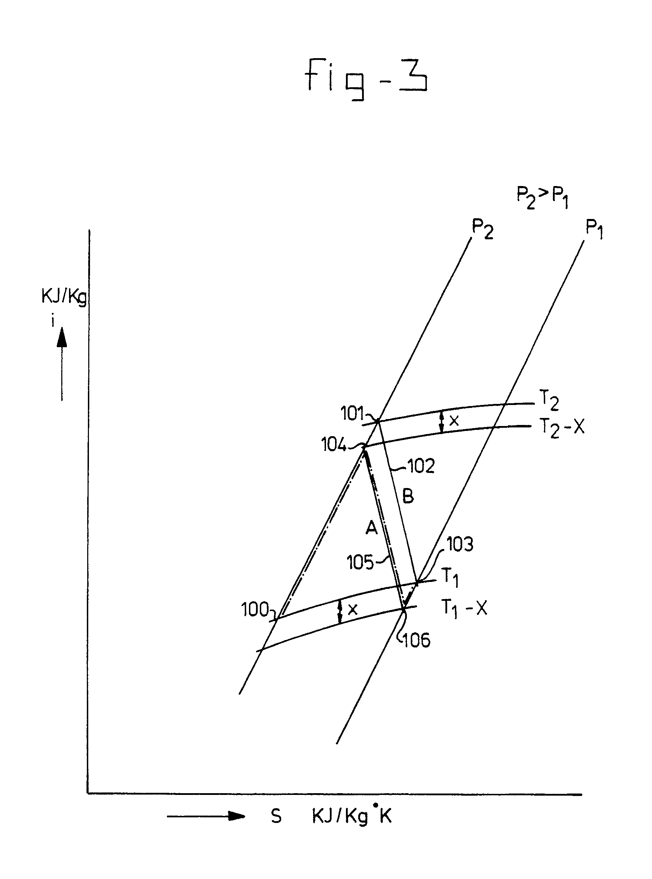

The temperature and the pressure changes experienced by the gas which is passed through a heating system according to the present invention are explained with reference to Figure 3. The gas will enter the heating system 1 at the inlet 2 at a pressure of $P_2$, such as, for example, 40 bar in the case of a gas receiving station. At the same time, the gas is at a temperature of $T_1$, in the case of natural gas approximately 10°C. The gas now has to be expanded to a pressure $P_1$, it possibly being desirable for various reasons that the temperature of the gas at the outlet 8 of the heating system 1 does not differ much from the temperature at the inlet 2. Because the difference between the pressures $P_2$ and $P_1$ is usually large, while the temperature of the gas is around 10°C as a consequence of the transportation and/or the storage, it will be necessary, for example, to prevent condensation problems, to heat the gas upstream of the expansion. Two ways of achieving this will be discussed, both making use of the heating system according to the present invention.

As is usual according to the prior art and as takes place in an embodiment of the present invention in which the first heat exchanger 3 and the second heat exchanger 7 are placed upstream of the expansion turbine 5 (for example, in accordance with Figure 2) the path indicated by B is traversed. In this process, the temperature is raised from $T_1$, in Figure 3 the point 100, to a temperature $T_2$, point 101, without the pressure increasing. Expansion then takes place along the line 102 whose slope is a measure of the efficiency of the expansion machine 5. After the expansion, the gas is at a pressure $P_1$ and a temperature $T_1$, the point 103.

The path indicated by A in Figure 3 can be traversed if the gas is heated upstream of, and downstream of, the expansion. Starting from the point 100, the gas will be heated, for example, in the first heat exchanger 3 to a temperature $T_2$-x, the point 104. Expansion then takes place along the line 105 and results in a temperature of $T_1$-x, at the point 106, at the final pressure $P_1$. Pre-heating of the gas then takes place, for example with the aid of the second heat exchanger 7, to a temperature $T_1$ at the point 103, the pressure remaining constant.

It can be clearly seen from Figure 3 that following path A or B yields the same result. However, if the gas is used to cool combustion air for the internal combustion engine, as is proposed by the present invention, cooling can only be carried out to a temperature of $T_1$ in the case of path B, whereas, in the case of path A, cooling can be carried out to a temperature of $T_1$-x. As a result of the varying input pressure of the expansion turbine, the exit temperature 106 cannot be accurately fixed. The final temperature 103 can be very accurately regulated by means of the second heating step and the associated regulating circuit. As may be clear, x signifies a certain enthalpy value which will yield a greater temperature difference at higher temperatures. If the heating system according to the present invention is connected to the natural gas mains, the following pressures and temperature may, for example, be expected:

$P_2$ 40 bar
$P_1$ 8 bar
$T_1$ 10°C
$T_2$ 90°C
$T_1$-x approximately 0°C
$T_2$-x approximately 78°C

Of course, the above is only an example of the present invention, other embodiments also fall within the framework of the present invention if they are characterised in that the combustion air for the internal combustion engine incorporated in the heating system is cooled with the aid of the gas which is expanded in said system, either upstream of, or downstream of, said expansion. As a result of this measure, it is possible to cool the combustion air for the internal combustion engine to a temperature which is not affected by the weather conditions, without intervention measures having to be taken.

## Claims

1. Heating system (1) for heating pressurised gas, in particular natural gas, which is expanded in an expansion machine (5), comprising an internal combustion engine (14), in particular a gas engine, and a first cooling circuit (11) for removing heat developed by the engine (14), which first cooling circuit (11) incorporates a first heat exchanger (3) for delivering heat obtained in cooling the engine (14) to the gas, characterised by a second cooling circuit (20) for cooling combustion air to be fed to the engine (14), which second cooling circuit (20) incorporates a second heat exchanger (7) for delivering heat obtained in cooling the combustion air to the gas.

2. Heating system according to Claim 1, characterised in that the first cooling circuit (11) incorporates a separate heat exchanger (15) for cooling the exhaust gases of the internal combustion engine and heating the gas.

3. Heating system according to Claim 1 or 2, characterised by an intercooler (21) for cooling the compressed air to be fed to the engine (14), which intercooler (21) is incorporated in the second cooling circuit (20).

4. Heating system according to Claim 1, 2 or 3, characterised in that the first heat exchanger (3) is situated upstream of the expansion machine (5) and the second heat exchanger (7) downstream thereof.

5. Heating system according to one or more of Claims 1 - 3, characterised in that the second heat exchanger (7) is situated upstream of the first heat exchanger (3), which is situated upstream of the expansion machine (5).

6. Heating system according to one or more of Claims 1 - 5, characterised in that the output shaft of the internal combustion engine (14) and the output shaft of the expansion machine (5) are able to drive one and the same generator, in particular an electrical generator (30).

fig-1

Fig-2

Fig-3